# EUROPÄISCHE PATENTANMELDUNG

(11) **EP 1 061 718 A2**
(43) Veröffentlichungstag der Anmeldung: **20.12.2000**
(21) Anmeldenummer: 00111417.2
(22) Anmeldetag: 26.05.2000
(51) Int. Cl.: H04M 1/725

(54) **Basisstation für ein Schnurlostelefon**

(30) Priorität: 16.06.1999 DE 19927585
(71) Anmelder: SIEMENS AKTIENGESELLSCHAFT, 80333 München (DE)
(72) Erfinder: Pillekamp, Klaus-Dieter, 40699 Erkrath (DE)

(57) **Zusammenfassung**

Eine Basisstation (1) für ein mobiles Telefon-Handgerät (2) hat einen Normalbetriebszustand, in dem sie ein Synchronisationssignal für das Handgerät (2) aussendet, und einen Ruhezustand, in dem sie das Synchronisationssignal nicht sendet, und ist in der Lage, den Ruhezustand einzunehmen, wenn ein Sensor (5) die Anwesenheit des Handgeräts (2) an der Basisstation (1) erfaßt.

## Beschreibung

Die vorliegende Erfindung betrifft eine Basisstation für ein mobiles Telefon-Handgerät, die in einem Normalbetriebszustand ein Synchronisationssignal für das Handgerät aussendet. Derartige Basisstationen werden zum Beispiel für Schnurlostelefone nach dem DECT-Standard eingesetzt. Basisstationen und Handgeräte nach diesem Standard kommunizieren auf einer Mehrzahl von Hochfrequenzträgern, die in Zeitschlitze unterteilt sind. Die Zeitschlitze werden jeweils der Übertragung von Sprachdaten von der Basisstation zu einem Handgerät beziehungsweise in Gegenrichtung zugeordnet. Um mit der Basisstation kommunizieren zu können, muß ein Handgerät die Zeitschlitze kennen, in denen es Daten an die Basisstation senden beziehungsweise von dieser empfangen kann. Um die hierfür notwendige Synchronisation von Basisstation und Handgeräten zu erreichen, senden Basisstationen nach DECT-Standard ununterbrochen ein gepulstes Identifikationssignal, den sogenannten Beacon aus.

Es ist nicht mit letzter Sicherheit bekannt, ob elektromagnetische Wellen wie eben dieses Beacon-Signal Auswirkungen auf die Gesundheit der Benutzer von Schnurlostelefonen haben. Eindeutige Hinweise auf die Gefährlichkeit sind bislang nicht gefunden worden, die in der öffentlichen Diskussion verwendeten Begriffe wie "Elektrosmog" sind aber durchaus geeignet, Anwender oder potentielle Anwender zu verunsichern. Es ist aber allerdings auch kaum möglich, die generelle Unbedenklichkeit von Funkwellen für den menschlichen Organismus zu beweisen. Es ist daher in jedem Fall wünschenswert, die Abstrahlung von Funkgeräten wie etwa den Basisstationen von Schnurlostelefonen auf das unbedingt notwendige Minimum zu beschränken.

Die vorliegende Erfindung löst diese Aufgabe, indem an einer Basisstation der eingangs definierten Art ein Sensor zum Erfassen der Anwesenheit des Handgeräts an der Basisstation vorgesehen wird, und indem die Basisstation neben dem Normalbetriebszustand aber einen Ruhezustand verfügt, in dem sie das Synchronisationssignal nicht sendet, und den sie einzunehmen in der Lage ist, wenn der Sensor die Anwesenheit des Handgeräts erfaßt.

Die Erfindung basiert wesentlich auf der Feststellung, daß Basisstationen nach dem DECT-Standard, obwohl sie eigentlich in der Lage sind, eine Mehrzahl von Handgeräten zu bedienen, von ihren Benutzern meist nur in Verbindung mit einem einzigen Handgerät eingesetzt werden. Solange dieses Handgerät sich an einer beliebigen, von der Basisstation entfernten Stelle befindet, ist das Beacon- beziehungsweise Synchronisationssignal erforderlich, damit das Handgerät mit der Basisstation kommunizieren und beispielsweise eine Rufnummer übertragen kann, um einen Anruf einzuleiten. Wenn sich das Handgerät aber an der Basisstation befindet, kann mit Sicherheit davon ausgegangen werden, daß kein Anruf über das Handgerät eingeleitet werden wird: Um dies zu tun, würde ein Benutzer das Gerät in die Hand nehmen, es also von der Basisstation entfernen. Folglich kann die Aussendung des Synchronisationssignals solange unterbleiben, wie sich das Handgerät an der Basisstation befindet.

Zu diesem Zweck ist am Gehäuse der Basisstation vorzugsweise eine Aufnahme für das Handgerät geformt, und der Sensor ist so eingerichtet, daß er die Anwesenheit des Handgeräts in der Aufnahme erfaßt.

Ein solcher Sensor kann in unterschiedlicher Weise ausgebildet sein. Es kann sich um einen einfachen Schalter handeln, der an der Aufnahme so angeordnet ist, daß er von einem darin befindlichen Handgerät mechanisch betätigt wird. Alternative Schalter sind - zum Beispiel induktive oder kapazitive - Näherungsschalter, eine Lichtschranke etc.

Häufig enthalten Basisstationen für mobile Handgeräte auch eine Ladevorrichtung für einen Akkumulator des Handgeräts. In einem solchen Fall kann der Sensor die Anwesenheit des Handgeräts auch anhand eines Stromflusses an der Ladevorrichtung erfassen.

Wenn ein externer Anruf an der Basisstation eintrifft, so schaltet diese, wenn sie sich im Ruhezustand befindet, umgehend in den Normalbetriebszustand um. Sobald dies zu einer Synchronisation des Handgeräts mit der Basisstation geführt hat, kann die Basisstation dem Handgerät den eintreffenden Anruf signalisieren, und dieses beginnt in üblicher Weise zu klingeln. Um einen solchen Zeitverlust zu vermeiden, kann auch die Basisstation mit einem Signalgeber wie etwa einer Klingel ausgestattet sein, die beim Eintreffen eines externen Anrufs zu läuten beginnt. Während der Zeit, die ein Benutzer normalerweise braucht, um das Handgerät zu greifen und zum Ohr zu führen, ist die Synchronisation in den meisten Fällen bereits hergestellt.

Wie gesagt, sind die meisten Basisstation nach DECT-Standard in der Lage, eine Mehrzahl von Handgeräten zu bedienen. Dabei ist es erforderlich, die zu bedienenden Handgeräte an der Basisstation anzumelden. Wenn deren Zahl größer als 1 ist, werden sich diese normalerweise nicht alle an der Basisstation befinden. Die von der Basisstation entfernten Handgeräte benötigen aber den Beacon, um mit ihr kommunizieren zu können. Deshalb ist es zweckmäßig, wenn ein Übergang der Basisstation in den Ruhezustand ausgeschlossen ist, wenn die Zahl der angemeldeten Handgeräte größer als 1 ist.

Weitere Merkmale und Vorteile der Erfindung ergeben sich aus der nachfolgenden Beschreibung von Ausführungsbeispielen mit Bezug auf die Figuren.

Es zeigen:
- Figur 1: eine Ansicht einer Basisstation mit einem Handgerät; und
- Figur 2: ein Blockdiagramm der Basisstation.

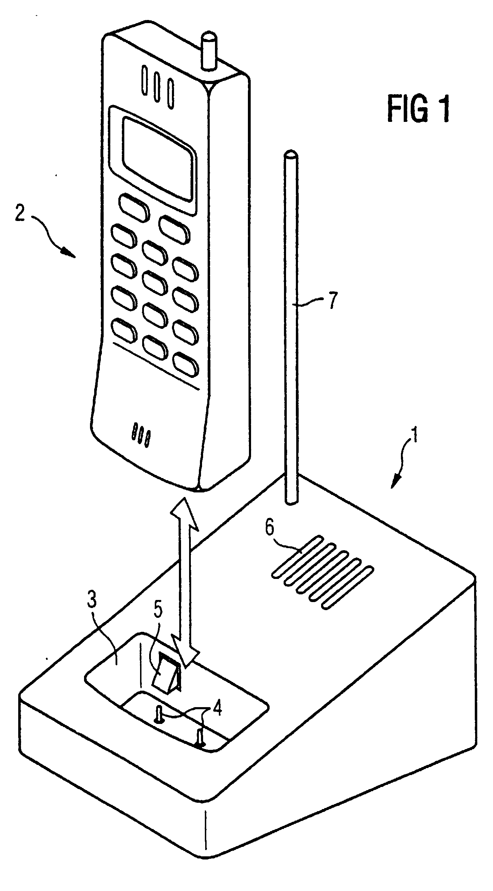

Figur 1 zeigt eine perspektivische Ansicht einer typischen Basisstation 1 mit einem zugehörigen Handgerät 2. Im Gehäuse der Basisstation 1 ist eine Aufnahme 3 geformt, in die das Handgerät 2 in einer solchen Stellung einführbar ist, daß (in der Figur nicht sichtbare) Kontaktflächen des Handgeräts 2 in Kontakt mit Ladekontaktstiften 4 am Boden der Aufnahme 3 kommen und gleichzeitig das Handgerät 2 einen Taster 5 an der Innenwand der Aufnahme 3 zurückdrängt, der auf diese Weise als Sensor für die Anwesenheit des Handgeräts 2 in der Aufnahme 3 fungiert.

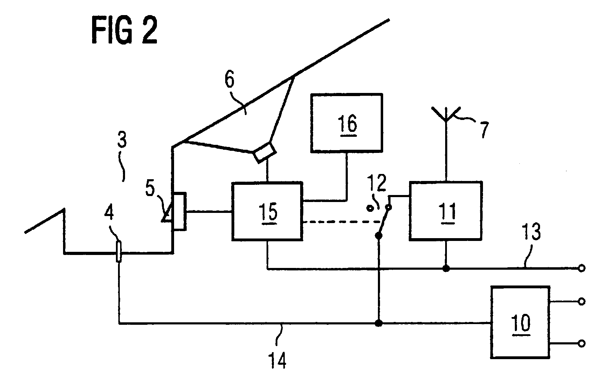

Der innere Aufbau der Basisstation ist in Figur 2 detaillierter dargestellt. Ein Netzteil 10 liefert eine Ladespannung an die Ladekontaktstifte 4 über eine Leitung 14 und eine Betriebsspannung für eine Sender-/Empfängerbaugruppe 11 über einen Schalter 12. Die Sender-/Empfängerbaugruppe 11 ist über eine Leitung 13 mit einem Fernmeldenetz verbunden. Die Sender-/Empfängerbaugruppe 11 dient dazu, das Beaconsignal an das Handgerät und gegebenenfalls Sprachsignale von der Leitung 13 über die Antenne 7 an das Handgerät und umgekehrt zu übermitteln.

Eine Verwaltungseinheit 15 ist mit dem Taster 5 und einem Mikroschalterblock 16 verbunden. Der Mikroschalterblock umfaßt eine Mehrzahl von Schaltern, an denen die Anzahl von von der Basisstation zu bedienenden Handgeräten eingestellt ist. Wenn diese Zahl gleich 1 ist, so wertet die Verwaltungseinheit 15 den Zustand offen oder geschlossen des Tasters 5 aus und erkennt daran, ob das Handgerät 2 sich in der Aufnahme 3 befindet oder nicht. Wenn ein Benutzer das Handgerät 2 in die Aufnahme 3 steckt, so reagiert die Verwaltungseinheit 15 darauf, indem sie den Schalter 12 öffnet und so die Versorgungsspannung der Sender-/Empfängerbaugruppe 11 abschaltet. Infolgedessen sendet die Basisstation keine Funksignale mehr aus, und ihr Stromverbrauch ist verringert.

Wenn ein Benutzer das Handgerät aus der Aufnahme 3 wieder entnimmt, um damit zu telefonieren, ändert sich der Zustand des Tasters 5. Auch dies wird von der Verwaltungseinheit 15 erfaßt, die daraufhin die Spannungsversorgung der Sender-/Empfängerbaugruppe 11 wiederherstellt. Es vergeht eine Zeit von typischerweise ca. 1 bis 1,5 s, bis die Synchronisation zwischen Basisstation und Handgerät wiederhergestellt ist. Da der Benutzer eine wenigstens gleich lange Zeit braucht, um die Nummer eines Gesprächspartners zu wählen, merkt er diese Verzögerung nicht.

Wenn ein externer Anruf auf der Leitung 13 eintrifft, so wird dies ebenfalls von der Verwaltungseinheit 15 registriert, und sie stellt die Spannungsversorgung der Sender-/Empfängerbaugruppe wieder her. Sobald die Synchronisation hergestellt ist, beginnt das Handgerät zu läuten, und der Benutzer kann das Gespräch annehmen.

Um eine Verzögerung bei externen Gesprächen zu vermeiden, kann die Basisstation 1 mit zum Beispiel einem Lautsprecher als Signalgeber 6 ausgestattet sein, der beim Eintreffen eines Anrufs von der Verwaltungseinheit 15 angesteuert wird und einen Klingelton abgibt.

Weitere Varianten der Erfindung betreffen die Erfassung der Anwesenheit des Handgeräts 2 an der Basisstation 1. So kann der Taster 5 anstatt in einer Wand der Aufnahme 3 beispielsweise an den Ladekontaktstiften 4 innerhalb des Gehäuses der Basisstation angeordnet sein, so daß er durch einen der unter der Last des Handgeräts herabgedrückten Ladekontaktstifte 4 betätigt wird.

Anstelle einer mechanischen Erfassung kommt auch eine elektrische Erfassung, zum Beispiel durch Messen eines Stromflusses oder Spannungsabfalls an der Leitung 14 zwischen dem Netzteil 10 und dem Handgerät 2 in Frage.

Eine berührungslose Erfassung ist zum Beispiel auch mit Hilfe einer in der Nähe der Aufnahme 3 angeordneten Schwingspule möglich, deren Resonanzfrequenz durch die Anwesenheit des Handgeräts, insbesondere von dessen metallhaltigem Akkumulator, in ihrer Nähe beeinflußt wird.

## Patentansprüche

1. Basistation (1) für ein mobiles Telefon-Handgerät (2), die in einem Normalbetriebszustand ein Synchronisationsignal für das Handgerät (2) aussendet, **dadurch gekennzeichnet,** daß die Basisstation über einen Sensor (5) zum Erfassen der Anwesenheit des Handgeräts (2) an der Basisstation (1) verfügt, und einen Ruhezustand, in dem sie das Synchronisationssignal nicht sendet, einzunehmen in der Lage ist, wenn der Sensor (5) die Anwesenheit des Handgeräts (2) erfaßt.

2. Basisstation nach Anspruch 1, **dadurch gekennzeichnet,** daß an einem Gehäuse der Basisstation eine Aufnahme (3) für das Handgerät (2) geformt ist, und daß der Sensor (5) die Anwesenheit des Handgeräts (2) in der Aufnahme (3) erfaßt.

3. Basisstation nach Anspruch 2, **dadurch gekennzeichnet,** daß der Sensor (5) einen Schalter umfaßt, der an der Aufnahme (3) so angeordnet ist, so daß er von einem in der Aufnahme (3) befindlichen Handgerät (2) betätigt wird.

4. Basisstation nach Anspruch 1 oder 2, **dadurch gekennzeichnet,** daß die Basisstation eine Ladevorrichtung (10, 13, 14) für einen Akkumulator des Handgeräts (2) umfaßt, und daß der Sensor die Anwesenheit des Handgeräts anhand eines Stromflusses an der Ladevorrichtung erfaßt.

5. Basisstation nach einem der vorhergehenden Ansprüche, **dadurch gekennzeichnet,** daß sie vom Ruhezustand in den Normalbetriebszustand übergeht, sobald ein externer Anruf eintrifft.

6. Basisstation nach einem der vorhergehenden Ansprüche, **dadurch gekennzeichnet,** daß sie einen Signalgeber (6) aufweist, der beim Eintreffen eines externen Anrufs ein für einen Benutzer wahrnehmbares Signal erzeugt.

7. Basisstation nach einem der vorhergehenden Ansprüche, **dadurch gekennzeichnet,** daß sie in der Lage ist, eine Mehrzahl von Handgeräten (2) zu bedienen, die an einer Verwaltungseinheit (15) der Basisstation angemeldet sind, und daß sie in den Ruhezustand nur übergeht, wenn die Zahl der angemeldeten Handgeräte (2) nicht größer als 1 ist.
